# EUROPÄISCHE PATENTANMELDUNG

(11) **EP 1 445 011 A1**
(43) Veröffentlichungstag der Anmeldung: **11.08.2004**
(21) Anmeldenummer: 04002938.1
(22) Anmeldetag: 10.02.2004
(51) Int. Cl.: B01D 47/06

(54) **Luftreinigungsgebläse**

(30) Priorität: 10.02.2003 DE 10305556
(71) Anmelder: Staubfresser GmbH, 68542 Heddesheim (DE)
(72) Erfinder: Michael Müller, 69493 Hirschberg (DE)
(74) Vertreter: Maucher W., Dipl.-Ing.

(57) **Zusammenfassung**

Ein Luftreinigungsgebläse (1) zum Entfernen von Staub, Schmutzpartikeln oder dergleichen Verunreinigungen aus der Raumluft weist einen ersten Schacht (2) mit einer Lufteinlass-Öffnung (3) für die zu reinigende Luft und einen zweiten Schacht (4) mit einer Luftausblas-Öffnung (5) für die gereinigte Luft auf, die an einem Übergangsbereich (8) miteinander in Durchgangsverbindung stehen. Zur Erzeugung eines Luftstroms zwischen der Lufteinlass-Öffnung (3) des ersten Schachts (2) und der Luftausblas-Öffnung (5) des zweiten Schachts (4) ist ein Gebläse (7) vorgesehen. Des Weiteren sind eine Vorrichtung (12) zum Befeuchten des Luftstroms und/oder zum Abscheiden der Verunreinigungen aus dem Luftstrom mittels eines Flüssigmediums sowie ein Reservoir (9) für das mit Verunreinigungen kontaminierte Flüssigmedium vorgesehen. Das Gebläse (7) ist im Ansaugbereich des ersten Schachts (2) angeordnet und die Vorrichtung (12) ist zur Erzeugung eines Flüssigkeitsschleiers in dem ersten Schacht (2) und/oder an dem Übergangsbereich (8) zwischen dem ersten Schacht (2) und dem zweiten Schacht (4) ausgebildet (Figur).

## Beschreibung

Die Erfindung bezieht sich auf ein Luftreinigungsgebläse zum Entfernen von Staub, Schmutzpartikeln oder dergleichen Verunreinigungen aus der Raumluft, das einen ersten Schacht mit einer Lufteinlass-Öffnung für die zu reinigende Luft und einen zweiten Schacht mit einer Luftausblas-Öffnung für die gereinigte Luft aufweist, die an einem Übergangsbereich miteinander in Durchgangsverbindung stehen, sowie mit einem Gebläse zur Erzeugung eines Luftstroms zwischen der Lufteinlass-Öffnung des ersten Schachts und der Luftausblas-Öffnung des zweiten Schachts, einer Vorrichtung zum Befeuchten des Luftstroms und/oder zum Abscheiden der Verunreinigungen aus dem Luftstrom mittels eines Flüssigmediums sowie einem Reservoir für das mit Verunreinigungen kontaminierte Flüssigmedium.

In Arbeitsbereichen, in denen eine starke Staub- oder Schmutzbildung auftritt, beispielsweise bei Baumaßnahmen in Innenräumen, ist es häufig erforderlich, die Luft zu filtern beziehungsweise zu reinigen. Hierzu werden Ventilatoren eingesetzt, die die Raumluft ansaugen und den darin enthaltenen Staub oder dergleichen Verunreinigungen in Filtermatten zurückhalten. Diese Filtermatten müssen jedoch häufig gereinigt oder ausgewechselt werden. Zudem kann Feinstaub zumeist in solchen Filtermatten nicht zurückgehalten werden. Nachteilig ist zudem, dass für eine effiziente Luftreinigung sehr große Filtermatten benötigt werden, so dass das Luftreinigungsgebläse sehr groß und schwer ist. Zudem ist eine hohe Ventilatoren-Leistung erforderlich, um die Luft durch die Filtermatten durchzublasen.
Andere Systeme sehen vor, die kontaminierte Luft aus dem Innenraum nach außen auszublasen. Je nach Arbeitsumgebung ist eine solche Führung des Luftstromes nicht immer möglich.

Aus der DE 199 51 184 C2 sowie der DE 299 18 704 U1 ist ein Luftreinigungsgebläse der eingangs erwähnten Art bekannt, bei dem über Düsen Flüssigmedium in den ersten Schacht eingespritzt wird, das die Verunreinigungen in der angesaugten Luft bindet, die anschließend in einem Auffangbehälter gesammelt werden. Die von den Verunreinigungen weitgehend befreite Luft wird durch den zweiten Schacht wieder in die Raumluft abgeleitet. Das Ansaugen der Raumluft erfolgt dabei saugseitig an einem Ableitstutzen des zweiten Schachtes. Das Gebläse zum Ansaugen der Luft muss daher sehr leistungsstark und somit entsprechend groß sein, um an der Lufteinlass-Öffnung des ersten Schachtes einen ausreichenden Ansaugdruck zu erzeugen. Ein solches großes Gebläse hat zudem ein hohes Eigengewicht und ist teuer. Da das vorbekannte Luftreinigungsgebläse die mit Wassertröpfchen beladene Luft ansaugt, ist im zweiten Schacht wenigstens ein Tröpfchenabscheider vorgesehen, der die bis in den zweiten Schacht angesaugten Tröpfchen im Gerät zurückhält. Für den beziehungsweise die Tröpfchenabscheider wird ebenfalls viel Platz benötigt.

Es besteht daher insbesondere die Aufgabe, ein Luftreinigungsgebläse der eingangs genannten Art zu schaffen, das einen geringen Platzbedarf hat und das leicht und kostengünstig sowohl in der Anschaffung als auch im Betrieb ist.

Die erfindungsgemäße Lösung dieser Aufgabe besteht darin, dass das Gebläse im Ansaugbereich des ersten Schachts angeordnet ist und dass die Vorrichtung zur Erzeugung eines Flüssigkeitsschleiers im ersten Schacht und/oder an dem Übergangsbereich zwischen dem ersten Schacht und dem zweiten Schacht ausgebildet ist.
Das Gebläse dient als Verdichter im Ansaugbereich, der einen atmosphärischen Überdruck erzeugt. Dieser muss lediglich so stark sein, damit die Luft durch den Flüssigkeitsschleier hindurchgedrückt wird. Somit ist ein Gebläse mit vergleichsweise geringer Leistung ausreichend, welches in der Folge entsprechend klein, leicht und kostengünstig ist.
Die in der angesaugten Luft enthaltenen Verunreinigungen werden beim Durchdringen des Flüssigkeitsschleiers von dem Flüssigmedium mitgenommen und in das Reservoir gespült. Die Luft, die den Flüssigkeitsschleier durchdrungen hat und so von den Verunreinigungen befreit ist, gelangt durch die Luftausblas-Öffnung des zweiten Schachts wieder in die Raumluft. Eventuell in der ausgeblasenen Luft verbliebene Flüssigkeits-Tröpfchen binden weitere in der Raumluft enthaltene Feinpartikel und bremsen so die Beweglichkeit der Raumluft beziehungsweise der Feinpartikel, wodurch die Wirksamkeit des Luftreinigungsgebläses zusätzlich unterstützt wird.
Die Vorrichtung zur Erzeugung des Flüssigkeitsschleiers kann dabei innerhalb des ersten Schachtes angeordnet sein und sich gegebenenfalls bis in den Übergangsbereich zum zweiten Schacht erstrecken.

Es ist zweckmäßig, wenn die Vorrichtung zum Befeuchten des Luftstroms mit Flüssigmedium wenigstens ein im oberen Bereich des ersten Schachtes und/oder des Übergangsbereichs zwischen erstem und zweitem Schacht angeordnetes Rohr aufweist, welches an seiner nach unten gerichteten Längskante eine oder mehrere nebeneinander angeordnete Austrittsöffnung (en) für das Flüssigmedium aufweist. Die Vorrichtung zum Befeuchten des Luftstroms mit Flüssigmedium kann so auf einfache Weise kostengünstig und platzsparend realisiert werden. Es können auch mehrere Rohre vorgesehen sein, die insbesondere in Richtung des Luftstromes hintereinander angeordnet sind und so einen breiteren Flüssigkeitsschleier erzeugen, mit dem Verunreinigungen besonders gründlich aus dem Luftstrom abgeschieden werden können. Die Austrittsöffnungen können dabei senkrecht nach unten ausgerichtet oder schräg angeordnet sein, um einen breiteren Bereich mit Flüssigmedium zu befeuchten.

Eine bevorzugte Ausführungsform sieht dabei vor, dass die Austrittsöffnung(en) des wenigstens einen Rohres längsförmig oder kreisförmig ausgebildet ist (sind). Dadurch ergibt sich ein dichter Flüssigkeitsschleier, der ein besonders gründliches Auswaschen der Verunreinigungen aus der durch den Flüssigkeitsschleier hindurchgeleiteten Luft ermöglicht.

Es ist vorteilhaft, wenn eine Pumpe zum Ansaugen von Flüssigmedium aus dem Reservoir und zum Zuführen an die Vorrichtung zum Befeuchten des Luftstroms vorgesehen ist, und wenn die Pumpe vorzugsweise im Reservoir für das Flüssigmedium angeordnet ist. Dadurch ergibt sich ein geschlossener Kreislauf für das Flüssigmedium, so dass dem Luftreinigungsgebläse nur zu Beginn eines Reinigungsvorganges eine bestimmte Menge Flüssigmedium zugeführt werden muss. Eine permanente Versorgung mit Flüssigmedium während der Luftreinigung, beispielsweise durch Anschließen über einen Schlauch an einen Wasserhahn ist nicht erforderlich. Ebenso ist kein Abflusssystem für verbrauchtes Flüssigmedium erforderlich. Dadurch kann das Luftreinigungsgebläse flexibel auch an Orten ohne Abflussmöglichkeit eingesetzt werden. Zudem ist ein wirtschaftlicher und ressourcenschonender Betrieb möglich.

Durch Anordnung der Pumpe innerhalb des Reservoirs kann das Luftreinigungsgebläse besonders kompakt ausgebildet werden. Darüber hinaus kann bezüglich der Flüssigmedium-Umwälzung ein hoher Wirkungsgrad erzielt werden, da keine unnötigen Verluste durch lange Zuleitungen entstehen, so dass auch eine niedrige Pumpenleistung und infolge dessen eine Pumpe kleiner Baugröße zum Betrieb des Luftreinigungsgebläses ausreicht.
Um das in dem Reservoir aufgefangene Flüssigmedium von den Verunreinigungen zu säubern ist es zweckmäßig, wenn in dem Reservoir ein Filtersystem zur Reinigung des mit Verunreinigungen kontaminierten Flüssigmediums vorgesehen ist. Dadurch ist einerseits vermieden, dass kontaminiertes Flüssigmedium wieder von der Pumpe angesaugt und so bereits ausgefilterte Verunreinigungen in den Flüssigkeitsschleier zurückgebracht werden. Andererseits können nach Beendigung des Reinigungsvorgangs das Flüssigmedium und die herausgefilterten Verunreinigungen umweltgerecht separat entsorgt werden.

Es ist weiter vorteilhaft, wenn das Reservoir lösbar an dem Luftreinigungs-Gebläse gehalten und/oder wannenartig ausgebildet ist. Durch eine lösbare Anordnung des Reservoirs an dem Luftreinigungsgebläse kann das Reservoir nach dem Luftreinigungsvorgang zum Entsorgen des Flüssigmediums und der Verunreinigungen einfach vom Korpus des Luftreinigungsgebläses gelöst und zur Entsorgungsstelle transportiert werden. Die lösbare Anordnung kann besonders einfach realisiert werden, wenn das Reservoir wannenartig ausgebildet ist. Der Korpus des Luftreinigungsgebläses kann dann einfach in dieses wannenartige Reservoir eingesetzt und zum Entleeren des Reservoirs von diesem abgenommen werden.

Eine Ausgestaltung des erfindungsgemäßen Luftreinigungsgebläses sieht vor, dass ein Luftleit-Element zum insbesondere lösbaren Verbinden mit dem der Luftausblas-Öffnung zugewandten Ende des zweiten Schachts vorgesehen ist. Dadurch kann die gereinigte Luft gezielt in einen bestimmten Bereich oder eine bestimmte Richtung des Raums abgeleitet werden.

Eine weitere Ausgestaltung sieht vor, dass im Bereich der Lufteinlass-Öffnung des ersten Schachts ein Anschluss für ein Luftleit-Element, insbesondere für einen Schlauch, vorgesehen ist. Das Luftleit-Element kann beispielsweise ein Schlauch mit einer Saugdüse sein, um eine punktuelle Luftreinigung zu ermöglichen. Die Saugdüse kann dann manuell von einer Bedienperson an einen Bereich, an dem starke Verunreinigungen auftreten, beispielsweise eine Säge oder dergleichen Baumaschine, geführt werden, so dass der Staub oder sonstige Verunreinigungen bereits am Ort ihres Entstehens beseitigt werden können, bevor sie große Bereiche der Raumluft kontaminieren.

Es kann zweckmäßig sein, wenn das Luftreinigungsgebläse ein Fahrgestell oder dergleichen Verfahreinrichtung aufweist. Im einfachsten Fall kann das Luftreinigungsgebläse an seiner Unterseite mehrere Rollen, gegebenenfalls Lenkrollen, aufweisen. Das Luftreinigungsgebläse kann dann einfach innerhalb der Arbeitsumgebung oder beim Transport von oder zu einer Arbeitsumgebung bewegt werden und ist so besonders flexibel einsetzbar.

Das erfindungsgemäße Luftreinigungsgebläse zeichnet sich durch eine kompakte Bauform sowie ein geringes Gewicht aus. Dadurch ist es leicht zu transportieren und flexibel auch in Arbeitsumgebungen mit beengten Platzverhältnissen einsetzbar. Das Luftreinigungsgebläse ist kostengünstig herstellbar, einfach in der Handhabung und schnell einsatzfähig, da keine aufwändigen Aufbauarbeiten erforderlich sind. Es besitzt einen hohen Wirkungsgrad und ist auch zur Filterung feinster Partikel aus der Raumluft geeignet. Dabei ist ein ressourcenschonender und umweltfreundlicher Betrieb bei geringen Betriebskosten möglich.
Als Flüssigmedium kann Wasser verwendet werden. Denkbar ist jedoch auch die Verwendung anderer Flüssigmedien, beispielsweise von sauren oder basischen Flüssigmedien zur Ausfilterung chemischer Schadstoffe.

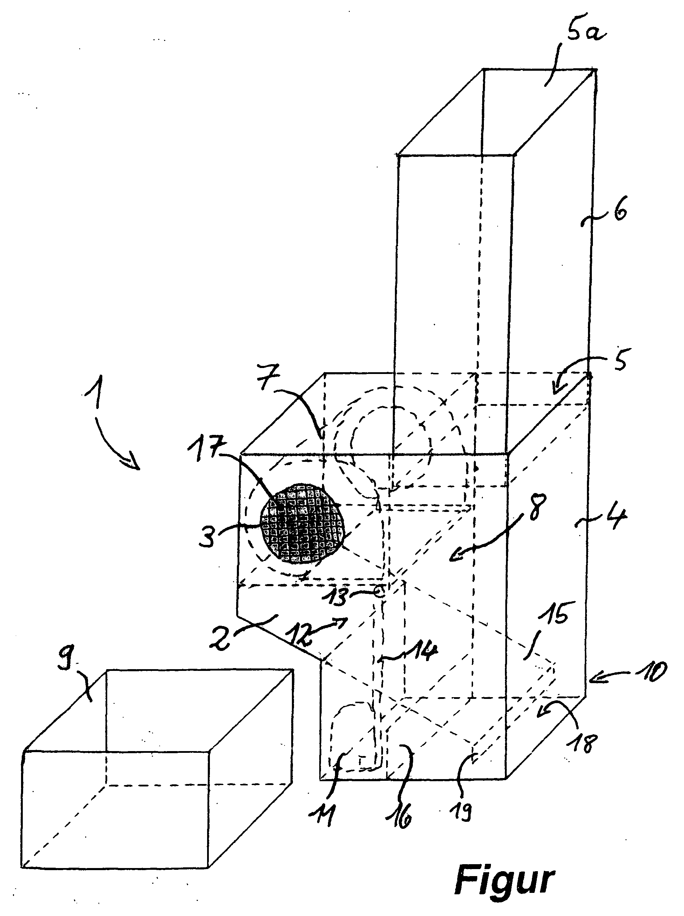

Nachstehend ist ein Ausführungsbeispiel eines erfindungsgemäßen Luftreinigungsgebläses anhand der Zeichnung näher erläutert.

Die einzige Figur zeigt ein erfindungsgemäßes Luftreinigungsgebläse in perspektivischer Ansicht.

Ein im ganzen mit 1 bezeichnetes Luftreinigungsgebläse zum Entfernen von Staub, Schmutzpartikeln oder dergleichen Verunreinigungen aus der Raumluft weist einen ersten Schacht 2 mit einer Lufteinlass-Öffnung 3 für die zu reinigende Luft und einen zweiten Schacht 4 mit einer Luftausblas-Öffnung 5 für die gereinigte Luft auf. Der erste Schacht 2 und der zweite Schacht 4 stehen an einem Übergangsbereich 8 in Durchgangsverbindung. Auf dem zweiten Schacht 4 ist ein Luftleit-Element 6 mit einer Luftausblas-Öffnung 5a aufgesetzt.

In dem ersten Schacht 2 ist ein strichliniert angedeutetes Gebläse 7 angeordnet, das Luft durch die Lufteinlass-Öffnung 3 ansaugt und durch den Übergangsbereich 8 in den zweiten Schacht 4 bläst, von wo sie durch die Luftausblas-Öffnung 5 beziehungsweise 5a in die Raumluft zurück entweichen kann.
Dem Luftreinigungsgebläse 1 ist ein wannenartiges Reservoir 9 zugeordnet, in das der untere Endbereich 10 des Luftreinigungsgebläses 1 lösbar eingesetzt werden kann. Der besseren Übersicht wegen sind in der Figur das Reservoir 9 und das Luftreinigungsgebläse 1 nebeneinander angeordnet dargestellt. Das Reservoir 9 wird vor der Benutzung des Luftreinigungsgebläses 1 mit Flüssigmedium, beispielsweise Wasser, gefüllt. Mit einer in Betriebsposition im Reservoir 9 angeordneten Pumpe 11 wird das Flüssigmedium aus dem Reservoir 9 zu einer Vorrichtung 12 zum Befeuchten des Luftstroms gepumpt. Diese Vorrichtung 12 ist am oberen Rand des Übergangsbereichs 8 zwischen erstem Schacht 2 und zweitem Schacht 4 angeordnet und besteht im wesentlichen aus einem in der Figur nur angedeutet dargestellten Rohr 13, welches an seiner nach unten gerichteten Längsseite eine als Längsschlitz ausgebildete Austrittsöffnung für das Flüssigmedium aufweist.
Bei eingeschalteter Pumpe 11 wird das Flüssigmedium somit aus dem Reservoir 9 über eine Zuleitung 14 in das Rohr 13 gepumpt, wo es aus der längsgeschlitzten Austrittsöffnung austritt und an dem Übergangsbereich 8 zwischen den beiden Schächten 2, 4 einen Flüssigkeitsschleier bildet.
Die durch den ersten Schacht 2 angesaugte, mit Verunreinigungen kontaminierte Luft wird von dem Gebläse 7 durch den Flüssigkeitsschleier gedrückt, wodurch die in der Luft befindlichen Verunreinigungen von dem Flüssigmedium aufgenommen und aus der Luft ausgefiltert werden. Die so gereinigte Luft wird durch den zweiten Schacht 4, das Luftleit-Element 6 und die Luftausblas-Öffnung 5a wieder in die Raumluft zurückgeblasen.

Das mit den Verunreinigungen angereicherte Flüssigmedium wird über ein Ablaufblech 15 in das Reservoir 9 abgeleitet und dort gesammelt. Aufschwimmende Verunreinigungen werden dabei von dem in das Flüssigmedium eintauchende Ablaufblech 15 in einem Ausschwemm- oder Einlaufbereich 18 des Reservoirs 9 zurückgehalten. Das Zurückhalten der aufschwimmenden Verunreinigungen kann besonders zuverlässig erfolgen, wenn das Ablaufblech 15 wie in der Figur gezeigt einen abgewinkelten Endbereich 19 aufweist, der im Wesentlichen senkrecht in das Flüssigmedium eintaucht.

Das derart vorgereinigte Flüssigmedium strömt unter dem Ablaufblech 15 hin zu einem Trennblech 16 am Boden des Reservoirs 9. Verunreinigungen, die schwerer sind als das Flüssigmedium, beispielsweise Staub- oder Schmutzpartikel, können sich dann in einem Absenkbereich des Reservoirs am Boden des Reservoirs 9 vor dem Trennblech 16 absetzen.

Das so von aufschwimmenden und absinkenden Verunreinigungen befreite Flüssigmedium strömt schließlich über das Trennblech 16, dessen oberes Ende unterhalb des Flüssigmedium-Füllstandes angeordnet ist, hinweg in den Reinwasserbereich des Reservoirs 9, in dem die Pumpe 11 angeordnet ist. Durch diese Aufteilung des Reservoirs 9 mittels des Ablaufblechs 15 und des Trennblechs 16 und dem damit erzielten Zurückhalten der Verunreinigungen ist verhindert, dass die im Übergangsbereich 8 mitgenommenen Verunreinigungen wieder von der Pumpe 11 angesaugt und erneut dem Flüssigkeitskreislauf zugeführt werden.

Durch die wannenartige Ausgestaltung des Reservoirs 9 kann dieses nach Gebrauch des Luftreinigungsgebläses 1 einfach von dem übrigen Gerät gelöst werden, um das Flüssigmedium und die ausgefilterten Verunreinigungen zu entsorgen. Ein Reinigen oder Auswechseln von Filtermaterialien, beispielsweise Filtermatten, ist nicht erforderlich, so dass das Luftreinigungsgebläse 1 diesbezüglich wartungsfrei betrieben werden kann.

Das Luftleit-Element 6 ermöglicht ein gezieltes Ausblasen der gereinigten Luft an eine bestimmte Stelle oder in eine gewünschte Richtung, so dass ein ungewolltes Vermengen der bereits gereinigten Luft mit der noch zu reinigenden Luft durch zu nahe räumliche Benachbarung von Lufteinlass-Öffnung 3 und Luftausblas-Öffnung 5 beziehungsweise 5a vermieden ist.
Da das Luftleit-Element 6 lösbar an dem zweiten Schacht 4 angeordnet ist, kann dieses einfach demontiert werden, beispielsweise zum Transport des Luftreinigungsgebläses 1.

An der Lufteinlass-Öffnung 3 ist noch ein Filtergitter 17 vorgesehen, um ein Ansaugen von zu großen Schmutzteilen, die das Gebläse 7 verstopfen oder beschädigen könnten, zu verhindern.

In der gereinigten, ausgeblasenen Luft können noch kleine Flüssigkeitsteilchen gelöst sein. Diese wirken sich positiv auf die verschmutzte Raumluft aus, da durch diese Flüssigkeitspartikel die verunreinigte Raumluft in ihrer Beweglichkeit gebremst wird.

## Patentansprüche

1. Luftreinigungsgebläse (1) zum Entfernen von Staub, Schmutzpartikeln oder dergleichen Verunreinigungen aus der Raumluft, das einen ersten Schacht (2) mit einer Lufteinlass-Öffnung (3) für die zu reinigende Luft und einen zweiten Schacht (4) mit einer Luftausblas-Öffnung (5) für die gereinigte Luft aufweist, die an einem Übergangsbereich (8) miteinander in Durchgangsverbindung stehen, sowie mit einem Gebläse (7) zur Erzeugung eines Luftstroms zwischen der Lufteinlass-Öffnung (3) des ersten Schachts (2) und der Luftausblas-Öffnung (5) des zweiten Schachts (4), einer Vorrichtung (12) zum Befeuchten des Luftstroms und/oder zum Abscheiden der Verunreinigungen aus dem Luftstrom mittels eines Flüssigmediums sowie einem Reservoir (9) für das mit Verunreinigungen kontaminierte Flüssigmedium, **dadurch gekennzeichnet, dass** das Gebläse (7) im Ansaugbereich des ersten Schachts (2) angeordnet ist und dass die Vorrichtung (12) zur Erzeugung eines Flüssigkeitsschleiers im ersten Schacht (2) und/oder an dem Übergangsbereich (8) zwischen dem ersten Schacht (2) und dem zweiten Schacht (4) ausgebildet ist.

2. Luftreinigungsgebläse nach Anspruch 1, **dadurch gekennzeichnet, dass** die Vorrichtung (12) zum Befeuchten des Luftstroms mit Flüssigmedium wenigstens ein im oberen Bereich des ersten Schachtes (2) und/oder des Übergangsbereichs (8) zwischen ersten und zweitem Schacht (2, 4) angeordnetes Rohr (13) aufweist, welches an seiner nach unten gerichteten Längskante eine oder mehrere nebeneinander angeordnete Austrittsöffnung(en) für das Flüssigmedium aufweist.

3. Luftreinigungsgebläse nach Anspruch 1 oder 2, **dadurch gekennzeichnet, dass** die Austrittsöffnung(en) des wenigstens einen Rohres (13) längsförmig oder kreisförmig ausgebildet ist (sind).

4. Luftreinigungsgebläse nach einem der Ansprüche 1 bis 3, **dadurch gekennzeichnet, dass** eine Pumpe (11) zum Ansaugen von Flüssigmedium aus dem Reservoir (9) und zum Zuführen an die Vorrichtung (12) zum Befeuchten des Luftstroms vorgesehen ist, und dass die Pumpe (11) vorzugsweise im Reservoir (9) für das Flüssigmedium angeordnet ist.

5. Luftreinigungsgebläse nach einem der Ansprüche 1 bis 4, **dadurch gekennzeichnet, dass** in dem Reservoir (9) ein Filtersystem zur Reinigung des mit Verunreinigungen kontaminierten Flüssigmediums vorgesehen ist.

6. Luftreinigungsgebläse nach einem der Ansprüche 1 bis 5, **dadurch gekennzeichnet, dass** die Ansaugstelle der Pumpe (11) in einem Sammelbereich für gereinigtes Flüssigmedium des Reservoirs (9) angeordnet ist.

7. Luftreinigungsgebläse nach einem der Ansprüche 1 bis 6, **dadurch gekennzeichnet, dass** das Reservoir (9) lösbar an dem Luftreinigungsgebläse (1) gehalten und/oder wannenartig ausgebildet ist.

8. Luftreinigungsgebläse nach einem der Ansprüche 1 bis 7, **dadurch gekennzeichnet, dass** ein Luftleit-Element (6) zum insbesondere lösbaren Verbinden mit dem der Luftausblas-Öffnung (5) zugewandten Ende des zweiten Schachts (4) vorgesehen ist.

9. Luftreinigungsgebläse nach einem der Ansprüche 1 bis 8, **dadurch gekennzeichnet, dass** im Bereich der Lufteinlass-Öffnung (3) des ersten Schachts (2) ein Anschluss für ein Luftleit-Element, insbesondere für einen Schlauch, vorgesehen ist.

10. Luftreinigungsgebläse nach einem der Ansprüche 1 bis 9, **dadurch gekennzeichnet, dass** das Luftreinigungsgebläse (1) ein Fahrgestell oder dergleichen Verfahreinrichtung aufweist.

11. Luftreinigungsgebläse nach dem Oberbegriff von Anspruch 1, insbesondere nach einem der Ansprüche 1 bis 10, **dadurch gekennzeichnet, dass** in dem zweiten Schacht (4) ein den Übergangsbereich (8) schneidendes, eine Ablaufschräge für das mit Verunreinigungen kontaminierte Flüssigmedium bildendes und mit seinem unteren Ende vorzugsweise mit Abstand unterhalb des Flüssigmedium-Füllstandes angeordnetes, in einen Einlaufbereich (18) des Reservoirs (9) mündendes Ablaufblech (15) sowie ein mit seinem oberen Ende unterhalb des Flüssigmedium-Füllstandes endendes, am Boden des Reservoirs (9) angeordnetes Trennblech (16) vorgesehen sind, wobei das Ablaufblech (15) mit seinem unteren Ende zwischen dem Einlaufbereich (18) des Reservoirs (9) und dem Trennblech (16) angeordnet ist, und dass die Ansaugstelle der Pumpe (11) in einem Sammelbereich für gereinigtes Flüssigmedium des Reservoirs (9) angeordnet ist.

12. Luftreinigungsgebläse nach einem der Ansprüche 1 bis 11, **dadurch gekennzeichnet, dass** das Gebläse (7) im Ansaugbereich des ersten Schachts (2) angeordnet ist.

13. Luftreinigungsgebläse nach einem der Ansprüche 1 bis 12, **dadurch gekennzeichnet, dass** die Einsaugöffnung der Pumpe (11) in einem durch das Trennblech (16) abgegrenzten Reinwasserbereich des Flüssigkeits-Reservoirs (9) angeordnet ist.
